# EUROPÄISCHE PATENTSCHRIFT

(11) **EP 0 463 379 B1**
(45) Veröffentlichungstag und Bekanntmachung des Hinweises auf die Patenterteilung: **05.10.1994**
(21) Anmeldenummer: 91108497.8
(22) Anmeldetag: 25.05.1991
(51) Int. Cl.: C10B 53/00, C08L 95/00

(54) **Verfahren zur Verwertung von Klärschlamm**
Process for the valorisation of sewage sludge
Procédé pour la valorisation de boues résiduaires

(30) Priorität: 28.06.1990 DE 4020552
(43) Veröffentlichungstag der Anmeldung: 02.01.1992
(73) Patentinhaber: WM Umwelttechnik GmbH, D-24159 Kiel (DE)
(72) Erfinder: Hinger, Klaus-Jürgen, Prof. Dr.-Ing., W-7000 Stuttgart 1 (DE)
(74) Vertreter: Hansmann, Dierk, Dipl.-Ing.

(56) Entgegenhaltungen:
- EP-A- 0 234 087
- DE-A- 3 718 133
- VERFAHRENSTECHNIK Bd. 23, Nr. 12, 1989, Seiten 62 - 65; A. JUNGHÄNEL:'UMWELTGERECHTE KLÄRSCHLAMMENTSORGUNG NACH DEM ANFELDER MODELL '

## Beschreibung

Die Erfindung betrifft ein Verfahren nach dem Oberbegriff des Anspruches 1.

Klärschlamm ist ein unerwünschtes Abfallprodukt der Abwasserreinigungsanlagen, dessen Beseitigung große Probleme bereitet. Die bisher praktizierte Ausbringung in der Landwirtschaft ist wegen der im Klärschlamm enthaltenen Schadstoffe rückläufig; die Deponierung von Klärschlamm wird durch gesetzliche Maßnahmen eingeschränkt. Bekannt ist es, Klärschlamm zu trocknen und den getrockneten Klärschlamm zu verbrennen. Die zurückbleibende Asche muß deponiert werden. Die in der Asche sehr häufig vorhandenen Schwermetalle, wie Chrom, Blei und andere können aus der Asche durch Sickerwasser wieder ausgelaugt werden und belasten daher auch die Umwelt.

Aus der Fachzeitschrift **"VERFAHRENSTECHNIK"**; 1989, Nr. 12, Seiten 62 bis 65 ist ein Verfahren der gattungsgemäßen Art bekannt, bei dem der KLärschlamm in einem direkt beheizten Trommeltrockner getrocknet wird. Der getrocknete Klärschlamm wird als fester Brennstoff in einem Asphaltmischwerk verbrannt, wobei die Verbrennungswärme zur Trocknung und Aufheizung der dem Asphalt zuzusetzenden Mineralstoffe eingesetzt wird. Die anfallende Asche wird dem aus Mineralstoffen, wie Sand, Kies, Stein-Splitt und dgl., und Bitumen als Bindemittel bestehenden Asphalt zugesetzt und dadurch wasserunlöslich gebunden. Die Verbrennung des getrockneten Klärschlamms im Asphaltmischwerk ist problematisch, da die Verbrennungsgase nur mit großem Aufwand gereinigt werden können. Weiterhin hat sich herausgestellt, daß die bei der Verbrennung des Klärschlamms anfallende Asche als rein mineralische Substanz wasseraufnahmefähig ist, so daß der Asphalt insgesamt durch Wasseraufnahme frostbruchgefährdet ist.

Aus der EP-A-0 234 087 ist ein Verfahren zur Verwertung von Klärschlamm bekannt, bei dem durch einen Entgasungsprozeß ein teerhaltiger Klärschlamm-Koks hergestellt wird, in dem wasserunlöslich Schwermetallanteile gebunden sind. Der Klärschlamm-Koks kann entweder direkt einer Erddeponie zugeführt werden, es ist aber auch möglich, eine Vermischung mit Asphalt vorzunehmen. Die Vermischung mit Asphalt hat das Ziel, die durch die Teeranteile bereits vorgenommene Bindung der Schwermetallanteile noch zu verstärken und ein Auslaugen von Schwermetallanteilen durch Sickerwasser zu vermeiden.

Der Erfindung liegt die Aufgabe zugrunde, ein Verfahren der gattungsgemäßen Art zu schaffen, bei dem nur geringe Emissionen von Schadstoffen in Abgasen auftreten und mit dem ein Füller für Asphaltmischgut erzeugt wird, der wasserabweisend ist und verbleibende Schadstoffe fest gebunden hat.

Diese Aufgabe wird erfindungsgemäß durch die Merkmale im Kennzeichnungsteil des Anspruch 1 gelöst.

Durch die erfindungsgemäßen Maßnahmen wird erreicht, daß zum einen keine Verbrennungs-Abgase aus der Klärschlammverbrennung, also keine Rauchgase, anfallen, aus denen Schadstoffe nur schwer zu entfernen wären. Die beim Entgasungsprozeß anfallenden geringen Mengen von Schwelgasen können verbrannt werden, was in besonders einfacher rückstandsfreier Weise in einer thermischen Nachverbrennung möglich ist. Durch die gleichzeitige Zerkleinerung des Klärschlamm-Kokses wird ein pulvriger Füller für Asphalt erhalten.

Auch unter ungünstigen Betriebsbedingungen wird erreicht, daß der Klärschlamm-Koks eine für Asphaltfüller geforderte Korngrößenverteilung aufweist.

Darüber hinaus wird erreicht, daß die einzelnen Partikel des Klärschlamm-Kokses noch organische, wasserabweisende Restsubstanzen enthalten, die teerartig sind und ein besonders gutes Bindevermögen zu Bitumen aufweisen. Durch die wasserabweisende Oberfläche der organischen Rest-Substanzen wird auch vermieden, daß die Füller im Asphalt Wasser aufnehmen. Die Frostbruchgefahr des Asphaltes wird also gebannt.

Weitere Merkmale, Vorteile und Einzelnheiten der Erfindung ergeben sich aus der nachfolgenden Beschreibung eines Ausführungsbeispiels anhand der Zeichnung.

In der Zeichnung sind Ausführungsbeispiele der Erfindung schematisch dargestellt. Es zeigen:
- Fig. 1: eine schematische Darstellung einer Anlage zur Behandlung von Klärschlamm
**und**

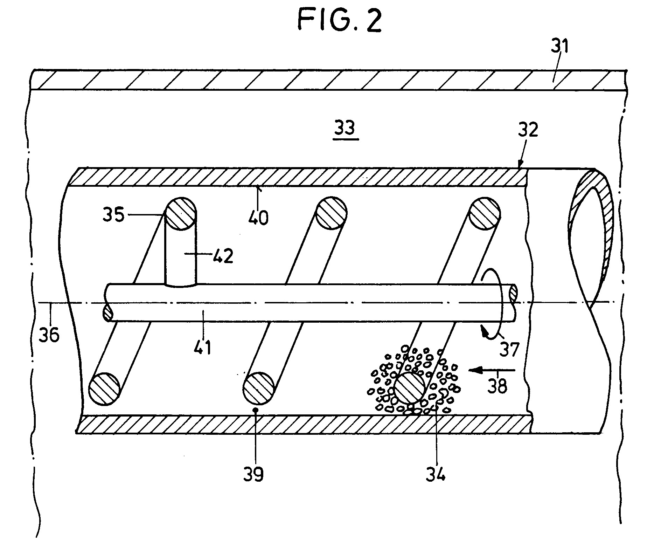

- Fig. 2: einen Teil-Querschnitt durch einen Apparat aus der Anlage gemäß Fig. 1.

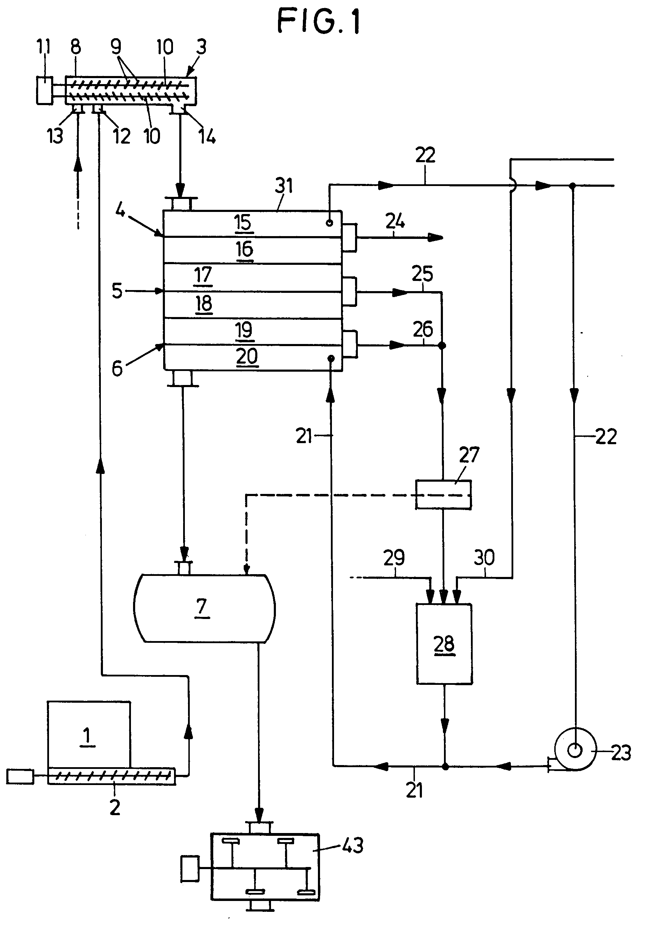

Wie sich aus Fig. 1 ergibt, sind hintereinander ein Silo 1 für Klärschlamm-Filterkuchen und ein Schnecken- Förderer 2 zum Transport von Klärschlamm-Filterkuchen aus dem Silo 1 zu einem Doppelwellen-Paddel-Mischer 3 vorgesehen. Dem Mischer 3 nachgeordnet ist ein zweistufiger Vortrocknungs-Apparat 4, diesem nachgeordnet ein Resttrocknungs-Apparat 5 und diesem wiederum nachgeordnet ein Entgasungs-Apparat 6, dem wiederum ein Silo 7 für Klärschlamm-Koks nachgeordnet ist.

Der Weg, der Transport und die Transportrichtung durch die Anlage sind jeweils durch Pfeile angedeutet.

Dem Silo 1 werden Klärschlamm-Filterkuchen mit etwa 35 bis 40 Gewichtsprozent (Gew.%) Trockensubstanzanteil, beispielsweise aus einer Kammerfilterpresse, zugeführt. Aus diesem Silo 1 werden sie mittels des Schnecken-Förderers 2 dem Doppelwellen-Paddel-Mischer 3 zugeführt. Dieser weist ein Gehäuse 8 auf, in dem zwei mit Misch-Paddeln 9 besetzte Wellen 10 angeordnet sind, die mittels eines Motors 11 antreibbar sind. An einem, dem Motor 11 benachbarten Ende ist ein Einlaßstutzen 12 vorgesehen, durch den die Filterkuchen zugeführt werden. Diesem benachbart ist ein weiterer Einlaßstutzen 13 vorgesehen, durch den ein Konditioniermittel für die im Vortrocknungs-Apparat 4 durchzuführende Vortrocknung zugeführt wird. Bei einem solchen Konditioniermittel kann es sich um den in später noch zu beschreibender Weise erzeugten Klärschlamm- Koks handeln. Bevorzugt handelt es sich aber um ein mineralisches Material, wie gemahlener Kalkstein, der die Eigenschaften des zu erzeugenden Klärschlamm-Kokses als Füller für Asphalt verbessert. In dem Mischer 3 wird jeweils der in Granulatform zugeführte Klärschlamm-Filterkuchen mittels des Konditioniermittels eingepudert, d.h. an seiner Oberfläche eingehüllt, damit bei der nachfolgenden Trocknung die entsprechende Wärmetauscherflächen in den Apparaten 4 und insbesondere 5 nicht mit Klärschlamm verkrustet werden. Der konditionierte in Granulatform vorliegende Klärschlamm-Filterkuchen verlaßt nach dem Mischvorgang den Mischer 3 durch einen Auslaßstutzen 14 und wird von dort zuerst der ersten Stufe 15 und nach deren Durchlaufen der zweiten Stufe 16 des Vortrocknungs-Apparates 4 zugeführt. Im Vortrocknungs-Apparat 4 wird der Klärschlamm auf einen Trockensubstanzanteil von etwa 85 Gew.% getrocknet. Er weist bei Verlassen der zweiten Stufe 16 des Vortrocknungs-Apparates 4 etwa eine Temperatur von 100°C auf. Anschließend durchläuft er ebenfalls wieder nacheinander zuerst die erste Stufe 17 und dann die zweite Stufe 18 des Resttrocknungs-Apparates 5. Er verlaßt diesen Apparat 5 als Pulver mit 100 Gew.% Trockensubstanzanteil und einer Temperatur von etwa 180°C.

Von hier aus durchläuft der getrocknete pulverförmige Klärschlamm zuerst die erste Stufe 19 und dann die zweite Stufe 20 des Entgasungs-Apparates 6, in dem der getrocknete Klärschlamm bei einer Temperatur von über 400°C bis 500°C und einer Verweilzeit von über 10 Minuten entgast, also verkokt, wird. Der eine Temperatur zwischen 400 und 500°C aufweisende Klärschlamm-Koks wird vom Entgasungs-Apparat 6 in den Silo 7 übergeben.

Die für die Durchführung der geschilderten thermischen Prozesse notwendige Wärme wird in folgender Weise zugeführt: An die zweite Stufe 20 des Entgasungs-Apparates 6 ist eine Heißgas-Leitung 21 angeschlossen, durch die Heißgas von etwa 500°C zugeführt wird. Dieses durchströmt die Stufen 20 bis 15 der Apparate 6 bis 4 im Gegenstrom zum Klärschlamm und verläßt die erste Stufe 15 des Vortrocknungs-Apparates 4 mit einer Temperatur von etwa 400°C. Zumindest ein Teil hiervon wird über eine Recycling-Leitung 22 und ein Heißgas- Gebläse 23 wieder der Leitung 21 zugeführt. Aus dem Vortrocknungs-Apparat 4 mündet eine Brüdendampf-Leitung 24 aus, durch die bei der Vortrocknung anfallender Brüdendampf von 100°C und Atmosphärendruck von 1 bar abgezogen wird, dessen Wärme durch Kondensation in bekannter Weise zurückgewonnen werden kann. Aus dem Resttrocknungs-Apparat 5 mündet ebenfalls eine Brüdendampf-Leitung 25 aus, über die bei der Resttrocknung anfallender Brüdendampf von etwa 100°C, der mit Geruch- und Schadstoffen belastet ist, abgezogen wird. Schließlich mündet aus dem Entgasungs-Apparat 6 eine Schwelgas-Leitung 26 aus, in die die Brüdendampf-Leitung 25 einmündet. Das Gemisch aus mit Geruch- und Schadstoffen angereicherten Dampf und Schwelgas wird einer Entstaubungs-Einrichtung 27 zugeführt, wo die Feststoffanteile abgetrennt werden, die in den Silo 7 überführt werden. Die von Feststoffen befreiten Dämpfe und Gase werden einer thermischen Nachverbrennungs-Anlage 28 zugeführt, der weiterhin über eine Gas-Leitung 29 Erdgas oder Faulgas und über Luft-Leitung 30 vorgewärmte Luft zugeführt werden. Die Schwelgase, die enthaltenen Geruch- und Schadstoffe und das Gas und der in der Luft enthaltene Sauerstoff werden verbrannt, so daß aus der thermischen Nachverbrennungs-Anlage 28 Heißgase mit einer Temperatur von über 850°C austreten, die in die Heißgas-Leitung 21 eingespeist werden. Durch Mischen dieser sehr heißen Heißgase mit dem über die Recycling-Leitung 22 zurückgeführten relativ stark abgekühlten Heißgas wird die Eintrittstemperatur von etwa 500°C erzeugt.

Außer der geschilderten thermischen Behandlung erfolgt eine mechanische Behandlung des Klärschlamms in den Apparaten 4,5,6, und zwar insbesondere im Resttrocknungs-Apparat 5 und im Entgasungs-Apparat 6.

Die einzelnen Stufen 15 bis 20 sind jeweils gleich ausgestaltet, und zwar als modular aufgebaute RohrbündelApparate. Sie weisen jeweils ein in Fig. 1 angedeutetes Gehäuse 31 auf, in dem eine Vielzahl von parallel zueinander angeordneten Rohren 32 angeordnet sind, durch die der Klärschlamm gefördert wird. Diese Rohrbündel-Apparate sind in allen Einzelheiten aus der DE 37 18 133 A1 (entsprechend EP 0 254 024 A3, entsprechend US 4 919 763) bekannt, worauf ausdrücklich verwiesen wird. Die Übertragung der Wärme erfolgt von dem Heißgas in einem vom jeweiligen Gehäuse 31 umschlossenen Heizraum 33 auf die Rohre 32 und von dort auf den in ihnen befindlichen Klärschlamm 34. Im Rohr ist - gleichermaßen wie bei den bekannten Rohrbündel-Apparaten - ein Schrauben-Förderorgan 35 konzentrisch zur Achse 36 des jeweiligen Rohres 32 angeordnet, das entsprechend dem Drehrichtungspfeil 37 drehantreibbar ist und hierdurch den granulierten Klärschlamm 34 in Förderrichtung 38 durch das jeweilige Rohr 32 transportiert. Im Spalt 39 zwischen dem aus Stab-Material bestehenden Förderorgan 35 und der Innenwand 40 des Rohres 32 erfolgt ein Mahlprozeß, d.h. der granulatförmige Klärschlamm 34 wird zerkleinert. Damit das aus stabförmigem Material bestehende Schrauben-Förderorgan 35 bei diesem Mahlprozeß nicht radial zur Achse 36 ausweichen kann, ist es - abweichend von der bekannten Ausgestaltung - mit einem konzentrisch zur Achse 36 angeordneten Wellenkern 41 mittels radial zur Achse 36 erstreckten Stützen 42 verbunden.

Diese mechanische Behandlung erfolgt primär im Resttrocknungs-Apparat 5 und im Entgasungs-Apparat 6, so daß der die zweite Stufe 20 des Entgasungs-Apparates 6 verlassende Koks einen Korndurchmesser im Bereich von 5 bis 100 µm hat.

Um dies zu erreichen, reicht es aus, wenn der Spalt 39 eine Weite von 3 bis 5 mm aufweist.

Der getrocknete Klärschlamm, der den Resttrocknungs- Apparat 5 verläßt, weist etwa 50 Gew.% mineralische Trockensubstanz und etwa 50 Gew.% organische Trockensubstanz auf, der die Funktion von Bindemittel zukommt. Durch die thermische und mechanische Behandlung im Entgasungs-Apparat 6 bei Temperaturen über 400°C weist der Klärschlamm-Koks, der den Apparat 6 verläßt, einen Anteil von 60 bis 90 Gew.% mineralischer Trockensubstanz und 40 bis 10 Gew.% organischer Substanz auf, wobei letztere die einzelnen Partikel wasserabweisend macht . Diese als Bindemittel dienende organische Substanz ist teerartig und verbindet sich gut mit Bitumen.

Bei der Verwendung von derartig hergestelltem Klärschlamm-Koks als Füller für Asphalt tritt also eine außerordentlich gute Bindung mit dem Bitumen des Asphalts ein. Es kann zweckmäßig sein, dem Mischer 3 als Konditioniermittel gemahlenen Kalkstein zuzuführen, wie bereits erwähnt wurde, um die Kornstruktur des Klärschlamm-Kokses als Füller für Asphalt besonders günstig zu gestalten.

Unter Asphalt wird ein als Straßenbelag verwendetes Material verstanden, das zu etwa 90 Gew.% aus Mineralstoffen, wie Sand, Kies, Stein-Split und dem als Füllstoff zugesetzten feinkrümeligen Klärschlamm-Koks und zu etwa 10 Gew.% aus Bitumen besteht.

Der Klärschlamm-Koks durchläuft im Silo 7 einen langsamen Abkühlungs- und Restentgasungsprozeß. Grundsätzlich ist es von Vorteil, den noch heißen KlärschlammKoks als Füller einem Asphalt-Mischer 43 zuzuführen, dem außerdem die bereits erwähnten Asphalt-Grundstoffe, wie Sand, Kies, Stein-Split und dgl. und Bitumen zugeführt werden. Selbstverständlich ist der Asphalt-Mischer 43 nur in seltenen Fällen dem Silo 7 unmittelbar nachgeordnet, d.h. das Einmischen des Klärschlamm-Kokses als Füllstoff in den Asphalt kann auch räumlich und zeitlich völlig unabhängig von dem geschilderten Verfahren erfolgen.

## Patentansprüche

1. Verfahren zur Verwertung von Klärschlamm, wobei der Klärschlamm vollständig getrocknet und einer anschließenden thermischen Behandlung unterzogen wird, und bei dem der Klärschlamm nach dem Trocknen einem Entgasungsprozeß bei Temperaturen über 400° Celsius bis 500° Celsius unterworfen wird, bis Klärschlamm-Koks gebildet ist, dadurch gekennzeichnet, daß zur Gewinnung von Füller für Asphalt während des Entgasungsprozesses eine mechanische Zerkleinerung durchgeführt wird, bei der der Klärschlamm-Koks pulverisiert wird, daß Klärschlamm-Filterkuchen in Granulatform eingesetzt wird, dem vor dem Trocknen gemahlener Kalkstein zugegeben wird und daß der Klärschlamm-Koks in Form von Partikeln verwendet wird, die 60 bis 90 Gew.% mineralische Substanz und 40 bis 10 Gew.% organische Substanz aufweisen, die aufgrund ihrer teerartigen Struktur die Partikel wasserabweisend machen und daß die mechanische Zerkleinerung bis zur Bildung von fein-pulvrigem Klärschlamm-Koks durchgeführt wird.

2. Verfahren nach Anspruch 1, dadurch gekennzeichnet, daß beim Entgasungsprozeß entstehende Schwelgase verbrannt werden.

3. Verfahren nach Anspruch 2, dadurch gekennzeichnet, daß die Schwelgase in einer thermischen Nachverbrennungs-Anlage verbrannt werden.

## Claims

1. Method for utilizing clarification sludge, wherein the clarification sludge is completely dried and subjected to a subsequent thermal treatment, and wherein the clarification sludge is subjected, after drying, to a degasification process at temperatures of more than 400° Celsius and up to 500° Celsius until clarification sludge coke is formed, characterized in that, for the purpose of recovering filler for asphalt during the degasification process, a mechanical comminution is carried out in which the clarification sludge coke is pulverised, that use is made of clarification sludge filter cake in granulate form to which ground limestone is added before the drying operation, and that the clarification sludge coke is used in the form of particles which have 60 to 90 % by weight of mineral substance and 40 to 10% by weight of organic substance, which substances, by reason of their tar-like structure, make the particles water-repellent, and that the mechanical comminution is carried out until finely pulverulent clarification sludge coke is formed.

2. Method according to Claim 1, characterised in that incompletely burned gases occurring during the degasification process are burned up.

3. Method according to Claim 2, characterized in that the incompletely burned gases are burned up in a thermal after-burning installation.

## Revendications

1. Procédé de mise en valeur de boues résiduaires, selon lequel les boues résiduaires sont complètement séchées et sont soumises à un traitement thermique subséquent et selon lequel les boues résiduaires sont après le séchage soumises à un traitement de dégazage à des températures supérieures à 400 °C Celsius et pouvant atteindre 500 °Celsius jusqu'à ce que soit formé du coke de boues résiduaires, le procédé étant caractérisé en ce que pour la récupération de matières de charge pour asphalte, au cours du traitement de dégazage, il est effectué un traitement mécanique au cours duquel le coke de boues résiduaires est pulvérisé, en ce qu'un gâteau de filtrage de boues résiduaires est amené sous forme de granules, gâteau de filtrage auquel il est, avant le séchage, ajouté de la pierre à chaux moulue, en ce que le coke de boues résiduaires est utilisé sous forme de particules présentant 60 à 90 % en poids de substance minérale et 40 à 10 % en poids de matière organique, qui en raison de leur structure du genre de celle du goudron, rendent les particules hydrofuges, et en ce que le broyage mécanique est effectué jusqu'à la formation de coke de boues résiduaires sous forme de poudre fine.

2. Procédé suivant la revendication 1, caractérisé en ce que les gaz de distillation lente produits lors du traitement de dégazage sont brûlés.

3. Procédé suivant la revendication 2, caractérisé en ce que les gaz de distillation lente sont brûlés dans une installation thermique de combustion complémentaire.
